# FASCICULE DE BREVET EUROPEEN

(11) **EP 0 695 920 B1**
(45) Date de publication et mention de la délivrance du brevet: **17.06.1998**
(21) Numéro de dépôt: 95420219.8
(22) Date de dépôt: 26.07.1995
(51) Int. Cl.: F25B 35/04

(54) **Réacteur de pompe à chaleur chimique à puissance améliorée**
Reaktor einer chemischen Wärmepumpe mit verbesserter Leistung
Chemical heat pump reactor with improved capacity

(30) Priorité: 02.08.1994 FR 9409829
(43) Date de publication de la demande: 07.02.1996
(73) Titulaire: LE CARBONE LORRAINE, 92400 Courbevoie (FR)
(72) Inventeur: Bou, Pierre, F-95230 Soisy sous Montmorency (FR); Moreau, Michel, F-92110 Clichy (FR); Prades, Philippe, F-66100 Perpignan (FR)
(74) Mandataire: Mougeot, Jean-Claude

(56) Documents cités:
- EP-A- 0 151 786
- WO-A-90/10491
- WO-A-91/15292
- CH-A- 609 140
- DE-C- 588 050
- FR-A- 2 455 713
- US-A- 1 854 589
- US-A- 2 384 460

## Description

### DOMAINE DE L'INVENTION

La présente invention concerne les réacteurs de pompes à chaleur chimique comprenant un bloc de réactif solide, ci-après désigné par l'expression "réactif solide".

Le réactif solide est généralement un mélange d'un sel réactif, tel que MnCl₂, NiCl₂, SrCl₂, BaCl₂, SrBr₂, ... et d'un matériau support, tel qu'un graphite naturel expansé.

### ETAT DE LA TECHNIQUE

Le principe des pompes à chaleur chimique, qui est bien connu (voir les brevets FR 2 547 512, 2 548 340 et 2 582 790), exploite les réactions thermochimiques reversibles entre un réactif solide et un gaz réactif telles que :

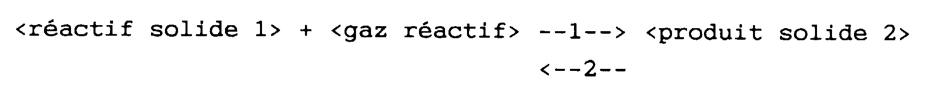

La réaction 1 est exothermique, c'est-à-dire qu'elle produit de la chaleur. La réaction 2 inverse est endothermique, c'est-à-dire qu'elle absorbe de la chaleur.

Le gaz réactif est choisi parmi ceux qui réagissent de manière réversible avec le sel réactif, tel que l'ammoniac (NH₃).

Le réactif solide est placé dans un réacteur, dont la paroi est le siège de transferts thermiques avec le réactif solide, c'est-à-dire la récupération ou l'introduction d'énergie thermique lors des réactions de synthèse (réaction 1) ou de regénération (ou décomposition) (réaction 2).

Le réacteur est généralement constitué d'une enceinte étanche en acier inoxydable munie d'un système de chauffage et de refroidissement. L'enceinte du réacteur possède simultanément une fonction structurale, c'est-à-dire qu'elle doit être étanche et assurer une tenue mécanique suffisante aux fortes pressions de contrainte (> 10 bars) inhérentes au fonctionnement du réacteur, et une fonction de transfert thermique, c'est-à-dire qu'elle doit assurer les échanges de chaleur entre le réactif solide et l'extérieur de la pompe à chaleur.

On comprend que le bon fonctionnement de ces réacteurs est notamment conditionné par le bon contact thermique entre la paroi du réacteur et le réactif solide. Pour cette raison, on emboîte habituellement, en force ou par sertissage, le réactif solide, qui est en général sous forme de blocs cylindriques solides.

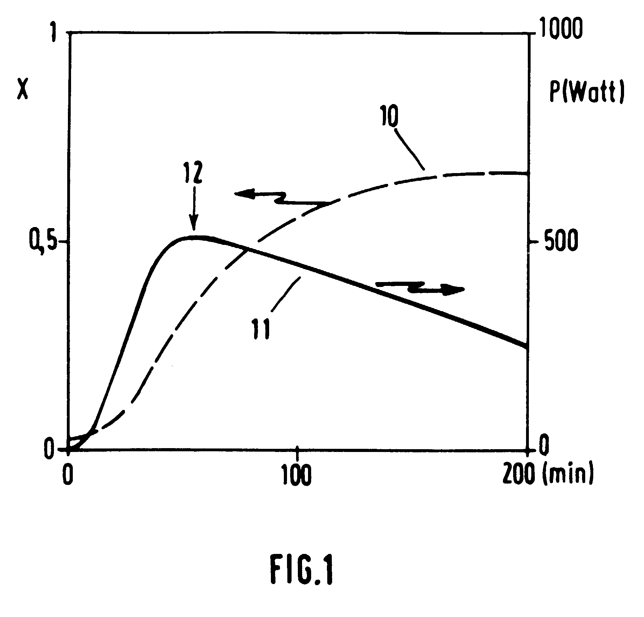

Il y a cependant des cas où, malgré cette précaution, les performances, initialement bonnes, se dégradent au cours des cycles de réactions, c'est-à-dire que, au cours des alternances entre les réactions de synthèse et les réactions de regénération, il apparaît un retard au démarrage de la réaction de synthèse (figure 1, courbe 10) et donc une importante perte de puissance du réacteur au démarrage (figure 1, courbe 11). La puissance n'atteint son maximum (12) qu'après un temps assez long, de l'ordre de l'heure. C'est le cas notamment, dans certaines conditions, lorsque le gaz réactif est de l'ammoniac, le réactif un chlorure et le support du graphite naturel expansé. A titre d'exemple, lorsque le sel réactif est du MnCl₂, le phénomène de perte de contact thermique apparaît lorsque la densité du bloc de graphite naturel expansé avant adjonction du sel réactif (dG) est égal à 0,1 g/cm³ et lorsque le taux de sel du bloc de graphite expansé après adjonction de sel (Ts) est supérieur à 45 %.

On attribue la dégradation des performances aux changements de volume du réactif solide qui peuvent apparaître lors des réactions de synthèse et de regénération. En effet, le volume molaire du produit de la réaction de synthèse (réaction 1) entre le sel réactif et le gaz réactif peut être supérieur à celui du réactif avant la réaction, comme c'est le cas lors de la réaction entre un sel anhydre et l'ammoniac. Ainsi, le bloc de réactif solide gonfle lors de la première réaction de synthèse et est comprimé contre la paroi du réacteur. Si le réactif solide est comprimé au delà de sa limite élastique, il se décolle de la paroi du réacteur lors de la réaction de regénération (réaction 2), qui fait diminuer le volume du réactif solide. En conséquence, le contact thermique entre le réactif solide et la paroi du réacteur se dégrade à chaque cycle de réactions jusqu'à n'être plus assuré que par la convection du gaz, ce qui diminue sensiblement le coefficient de transfert thermique à la paroi (hsw < 10 W/m².K) et entraîne un retard au démarrage de la réaction de synthèse suivante et une importante perte de puissance du réacteur.

La demanderesse s'est fixé pour objectif d'éliminer le problème de la perte de puissance du réacteur qui apparaît au cours des cycles de réactions en maintenant le coefficient de transfert thermique, entre le réactif solide et la paroi du réacteur, à une valeur élevée et stable, c'est-à-dire à une valeur supérieure à 50 W/m².K, au cours des cycles de réactions de synthèse et de regénération, quels que soient les changements de volume du réactif solide.

Dans le cas des réacteurs comprenant un lit de réactif, il est connu par le brevet allemand DE 588 050 de diviser l'enceinte du réacteur en cellules dont les cloisons, conductrices de chaleur, peuvent se déplacer de manière à céder sous la pression exercée par le réactif en cours de réaction. Certaines cellules contiennent le lit de réactif ; les autres cellules, ainsi que l'espace libre aux extrémités de l'enceinte, sont complètement remplis d'un matériau de remplissage poreux et bon conducteur de la chaleur, tel que la laine d'acier, qui se comprime sous l'action des mouvements desdites cloisons et qui contribue à la transmission de la chaleur.

### DESCRIPTION DE L'INVENTION

L'invention a pour objet un réacteur pour pompe à chaleur chimique comprenant une enceinte étanche munie d'un système de chauffage et de refroidissement et un réactif solide, caractérisé en ce que les dimensions du réactif solide sont telles qu'il existe un espace entre la surface du réactif solide et la paroi interne de l'enceinte du réacteur, et en ce qu'un matériau de contact fluide, bon conducteur thermique et chimiquement inerte vis-à-vis du réactif solide, occupe une partie de cet espace, de manière à absorber les variations de volume dudit réactif solide, en s'écoulant sous la contrainte de celui-ci, et à préserver un contact thermique suffisant avec ladite paroi.

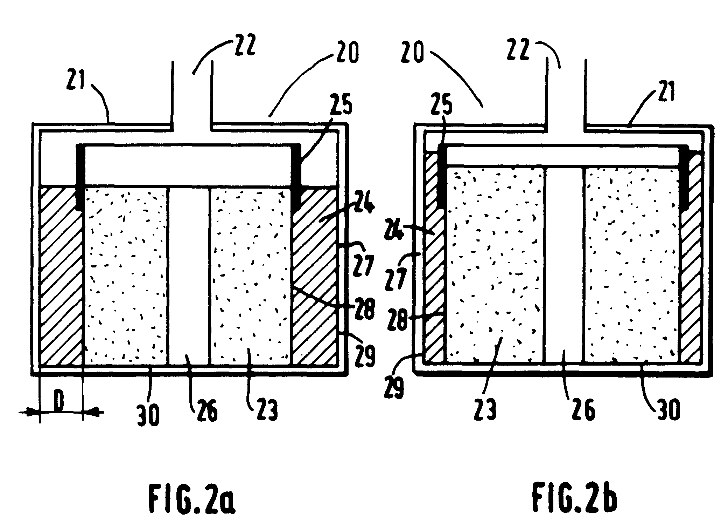

Les figures 2a et 2b montrent un schéma du réacteur selon l'invention à deux étapes différentes du cycle de réactions de synthèse et de regénération.

Le réactif solide repose généralement sur le fond de l'enceinte du réacteur, mais ce choix n'est nullement limitatif et le réactif solide peut être suspendu ou séparé du fond de l'enceinte.

La distance moyenne D entre tout point de la surface latérale du solide réactif et la paroi interne du réacteur (figure 2a) est de préférence entre 1 et 10 mm. Un espace trop restreint ne permettrait pas un remplissage satisfaisant, réduirait les transferts thermiques et les échanges gazeux, et limiterait l'écoulement du matériau de contact fluide. D'autre part, un espace trop grand réduirait l'énergie stockée dans le réacteur en diminuant la quantité de réactif solide et réduirait également les transferts thermiques entre le réactif solide et la paroi du réacteur, et donc la puissance du réacteur.

Le matériau de contact fluide est de préférence une poudre de matériau conducteur thermique, tel que du graphite naturel en poudre ou en paillettes ou du métal en paillettes ou atomisé. Dans le cas du graphite en poudre ou en paillettes, la densité apparente se situe entre 0,5 et 1,0 g/cm³, de préférence entre 0,6 et 0,8 g/cm³.

Le matériau de contact fluide sous forme de poudre présente l'avantage d'une porosité élevée qui permet une diffusion plus rapide du gaz réactif que celle qu'assurent les diffuseurs logés à l'intérieur du réactif solide. Le transfert de masse est ainsi amélioré.

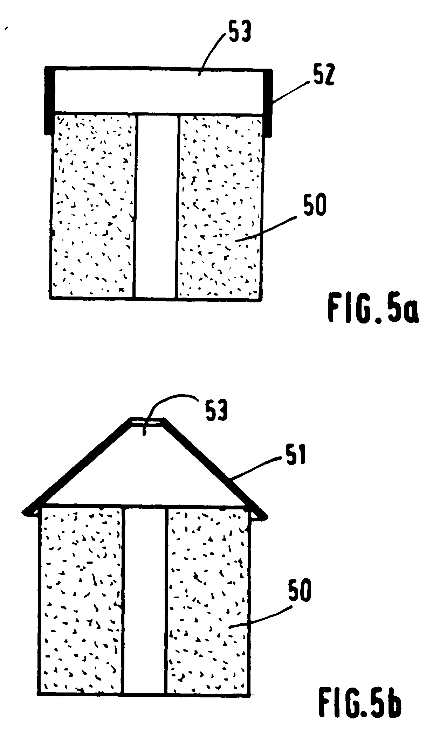

Le réactif solide peut être muni d'un dispositif de confinement du matériau de contact fluide. Ce dispositif permet de limiter les mouvements du matériau de contact fluide et l'empêche notamment de s'accumuler sur le dessus du réactif solide, ce qui nuirait à son retour dans l'espace entre le réactif solide et la paroi du réacteur lors de la contraction du réactif solide. Le dispositif de confinement permet aussi au gaz réactif d'accéder facilement au réactif solide. Il existe plusieurs façons de réaliser le dispositif de confinement selon l'invention. Les figures 5a et 5b illustrent deux réalisations possibles. La réalisation illustrée à la figure 5a présente le double avantage d'une grande simplicité et d'une ouverture très grande qui facilite la diffusion du gaz réactif. La réalisation illustrée à la figure 5b présente comme avantage principal de faciliter le remplissage de l'espace entre le réactif solide et la paroi de l'enceinte avec le matériau de contact fluide.

On constate, comme le montrent les exemples, que le réacteur selon l'invention atteint rapidement une puissance très élevée au démarrage de la réaction de synthèse, et qui reste très élevée par la suite, et que ces performances sont maintenues après plusieurs cycles de réactions. On attribue ce résultat au fait que le matériau de contact fluide absorbe les variations de volume du réactif solide en s'écoulant sous la contrainte de ce dernier, c'est-à-dire en remontant ou en descendant le long de la paroi au cours de la dilatation ou de la contraction du réactif solide, tout en préservant un contact thermique suffisant avec la paroi du réacteur, c'est-à-dire hsw > 50 W/m².K. Ainsi, l'énergie dégagée s'évacue rapidement quel que soit le volume du réactif solide, donc à tout moment de la réaction de synthèse. Pour les mêmes raisons, le coefficient de transfert thermique est maintenu lors de la réaction inverse de regénération.

Un autre avantage du réacteur selon l'invention réside dans la simplicité de la solution qui permet, à l'aide de matériaux facilement disponibles, d'améliorer sensiblement les performances de la pompe à chaleur sans apporter de modification majeure au réacteur de l'art antérieur.

### DESCRIPTION DES FIGURES

La figure 1 montre la cinétique de la réaction de synthèse, c'est-à-dire l'avancement de la réaction de synthèse X en fonction du temps (10) et la puissance P qui en résulte (11), d'une pompe à chaleur chimique munie d'un réacteur selon l'art antérieur. La puissance démarre à un niveau très faible et n'atteint son maximum (12) qu'après un temps très long de l'ordre de l'heure.

Les figures 2a et 2b schématisent, à deux étapes différentes du cycle de réactions, le réacteur de pompe à chaleur selon l'invention. Un réacteur (20), constitué d'une enceinte étanche (21) munie d'une arrivée de gaz réactif (22), contient le réactif solide (23), le matériau de contact fluide (24) et un dispositif de confinement du matériau de contact fluide (25). Dans le cas illustré ici, un fluide caloporteur circule à l'intérieur de la double paroi (27) de l'enceinte. Le système de chauffage n'est pas illustré. Une distance moyenne D sépare tout point de la surface latérale (28) du réactif solide (23) et de la surface interne (29) de l'enceinte (21). Le réactif solide illustré dans ces figures repose sur le fond (30) de l'enceinte (21) et est muni d'un diffuseur (26) en son centre, mais le solide réactif peut être disposé différemment dans l'enceinte et posséder plusieurs diffuseurs. La figure 2a correspond à l'étape du cycle de réactions juste avant la réaction de synthèse : le réactif solide occupe son volume minimum et le matériau de contact est au niveau bas. La figure 2b correspond à l'étape du cycle de réactions à la fin de la réaction de synthèse : le réactif solide occupe son volume maximum et le matériau de contact est au niveau haut.

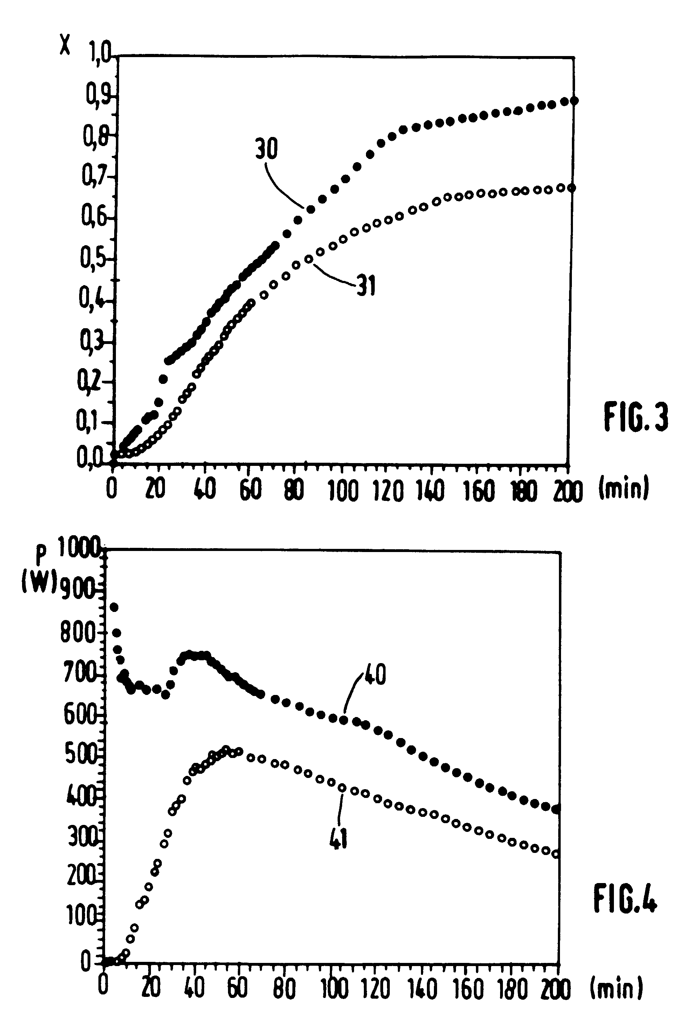

La figure 3 compare la cinétique de réaction de synthèse, c'est-à-dire la fraction du réactif solide ayant réagi (X) en fonction du temps (en minutes), d'un réacteur selon l'invention (30) à celle d'un réacteur selon l'art antérieur (31). La synthèse démarre à X = 0 (0 %) et est complète lorsque X = 1 (100 %).

La figure 4 compare la puissance (P) d'un réacteur selon l'invention (40) à celle d'un réacteur selon l'art antérieur (41). La puissance (en Watt) est mesurée en fonction du temps (en minutes).

Les figures 5a et 5b illustrent deux réalisations du dispositif de confinement selon l'invention. Dans les deux cas, le dispositif de confinement est fixé sur la partie haute du réactif solide (50) et possède une ouverture (53) qui facilite le passage du gaz réactif. Le dispositif de confinement (52) de la figure 5a est de forme cylindrique. Le dispositif de confinement (51) de la figure 5b est de forme conique tronquée.

### EXEMPLES

### Exemple 1

Un réacteur selon l'art antérieur a été réalisé et mis à l'essai. Pour cela un cylindre de réactif solide de 150 mm de diamètre et de 100 mm de hauteur a été fabriqué à l'aide de graphite naturel expansé et de MnCl₂. La densité dG du graphite expansé était de 0,11 g/cm³ et le taux de sel réactif Ts de 62 %. Le cylindre de réactif solide a été introduit à force dans l'enceinte d'un réacteur en acier inoxydable de 150 mm de diamètre et de 200 mm de hauteur.

La cinétique de la réaction de synthèse a été mesurée en fonction du temps au cours de plusieurs cycles de réactions. La pression de contrainte était de 0,2 bar et la différence de température entre le réactif solide et la paroi du réacteur était de 20 °C. La courbe (31) de la figure 3 correspond au résultat obtenu au dixième cycle. On observe un retard d'une dizaine de minutes avant le démarrage de la réaction de synthèse.

La puissance a également été mesurée en fonction du temps. Le résultat obtenu au dixième cycle correspond à la courbe (41) de la figure 4. On en déduit un coefficient de transfert thermique inférieur à 5 W/m².K.

### Exemple 2

Un réacteur selon l'invention a été réalisé et mis à l'essai. Pour cela un cylindre de réactif solide de 140 mm de diamètre et de 100 mm de hauteur a été fabriqué à l'aide des mêmes constituants et dans les mêmes proportions que l'exemple 1. Le cylindre de réactif solide a été introduit dans l'enceinte d'un réacteur en acier inoxydable de 150 mm de diamètre et de 200 mm de hauteur. Un dispositif de confinement du matériau de contact fluide de forme cylindrique a été fixé sur la face supérieure du réactif solide.

Des paillettes de graphite naturel de Madagascar ont ensuite été versées dans l'espace entre la paroi du réacteur et le réactif solide, jusqu'en haut du réactif solide. La densité apparente des paillettes était comprise entre 0,68 et 1,0 g/cm³.

La cinétique de la réaction de synthèse et la puissance de cette pompe à chaleur chimique ont été mesurées en fonction du temps dans les mêmes conditions que l'exemple 1. Les résultats obtenus au dixième cycle correspondent à la courbe (30) de la figure 3 et à la courbe (40) de la figure 4. On en déduit un coefficient de transfert thermique de 90 W/m².K.

On observe donc un démarrage presque immédiat de la réaction de synthèse. Le fait que l'avancement de la réaction dans des conditions limitantes de transfert de masse, c'est-à-dire ici une pression de contrainte de 0,2 bar à la fin de l'étape de regénération, n'est plus limité à X = 0,6 (60 %) mais à X = 0,9 (90 %) pour un temps de réaction de 200 minutes pourrait être imputé au maintien de la porosité du réactif solide qui n'est pas redensifié par la paroi lors des cycles de réactions de synthèse. On observe aussi une puissance disponible toujours nettement supérieure à celle obtenue avec la pompe à chaleur chimique selon l'art antérieur, notamment dans les 40 premières minutes.

On a également constaté que ces performances sont maintenues au cours des cycles de réactions.

## Revendications

1. Réacteur pour pompe à chaleur chimique comprenant une enceinte étanche munie d'un système de chauffage et de refroidissement et un réactif solide, lequel réactif solide réagit de façon renversable avec un gaz réactif à l'intérieur de ladite enceinte, caractérisé en ce que les dimensions dudit réactif solide sont telles qu'il existe un espace entre la surface dudit réactif solide et la paroi interne de ladite enceinte, et en ce qu'un matériau de contact fluide, bon conducteur thermique et chimiquement inerte vis-à-vis du réactif solide, occupe une partie de cet espace, de manière à absorber les variations de volume dudit réactif solide, en s'écoulant sous la contrainte de celui-ci, et à préserver un contact thermique suffisant avec ladite paroi.

2. Réacteur selon la revendication 1, caractérisé en ce que, au niveau dudit espace, la distance moyenne entre tout point de la surface latérale dudit solide réactif et ladite paroi interne dudit réacteur se situe entre 1 et 10 mm.

3. Réacteur selon l'une des revendications 1 et 2, caractérisé en ce que ledit matériau de contact fluide est du graphite en poudre ou en paillettes.

4. Réacteur selon la revendication 3, caractérisé en ce que ledit graphite est du graphite naturel.

5. Réacteur selon l'une des revendications 1 et 2, caractérisé en ce que ledit matériau de contact fluide est une poudre métallique en paillettes ou atomisée.

6. Réacteur selon l'une des revendications 3 et 4, caractérisé en ce que la densité apparente dudit graphite en poudre ou en paillettes est comprise entre 0,5 et 1,0 g/cm³.

7. Réacteur selon l'une des revendications 3 et 4, caractérisé en ce que la densité apparente dudit graphite en poudre ou en paillettes est comprise entre 0,6 et 0,8 g/cm³.

8. Réacteur selon l'une des revendications 1 à 7, caractérisé en ce que ledit réactif solide est muni d'un dispositif de confinement dudit matériau de contact fluide.

## Patentansprüche

1. Reaktor für eine chemische Wärmepumpe, umfassend einen Sicherheitsbehälter mit einem Heiz- und Kühlsystem und ein festes Reagens, welches feste Reagens im Innern des Behälters mit einem reaktiven Gas reversibel reagiert, dadurch gekennzeichnet, daß die Dimensionen des festen Reagens so gewählt sind, daß zwischen der Oberfläche des festen Reagens und der Innenwand des Behälters ein Raum vorhanden ist, und daß ein flüssiger, gut wärmeleitender und gegenüber dem festen Reagens chemisch inerter Kontaktwerkstoff einen Teil dieses Raumes einnimmt und auf diese Weise die Volumenschwankungen des festen Reagens durch Abfließen unter dessen Beanspruchung absorbiert und einen ausreichenden Thermokontakt mit der Wand aufrechterhält.

2. Reaktor nach Anspruch 1, dadurch gekennzeichnet, daß im Bereich des Raumes der mittlere Abstand zwischen jedem Punkt der Seitenfläche des festen Reagens und der Innenwand des Reaktors 1 bis 10 mm beträgt.

3. Reaktor nach einem der Ansprüche 1 und 2, dadurch gekennzeichnet, daß es sich bei dem flüssigen Kontaktwerkstoff um pulvriges oder blättriges Graphit handelt.

4. Reaktor nach Anspruch 3, dadurch gekennzeichnet, daß es sich bei dem Graphit um Naturgraphit handelt.

5. Reaktor nach einem der Ansprüche 1 und 2, dadurch gekennzeichnet, daß es sich bei dem flüssigen Kontaktwerkstoff um ein blättriges oder zerstäubtes Metallpulver handelt.

6. Reaktor nach einem der Ansprüche 3 und 4, dadurch gekennzeichnet, daß die scheinbare Dichte des pulvrigen oder blättrigen Graphits 0,5 bis 1,0 g/cm³ beträgt.

7. Reaktor nach einem der Ansprüche 3 und 4, dadurch gekennzeichnet, daß die scheinbare Dichte des pulvrigen oder blättrigen Graphits 0,6 bis 0,8 g/cm³ beträgt.

8. Reaktor nach einem der Ansprüche 1 bis 7, dadurch gekennzeichnet, daß das feste Reagens mit einer Einschlußvorrichtung für den flüssigen Kontaktwerkstoff versehen ist.

## Claims

1. A reactor for a chemical heat pump including a sealed container provided with a heating and cooling system and a solid reagent, which solid reagent reacts reversibly with a reagent gas inside said container, characterized in that the dimensions of the solid reagent are such that there is a space between the surface of said solid reagent and the inside wall of said container, and in that a fluid contact material, which is a good conductor of heat and chemically inert relative to said solid reagent, occupies part of said space, so as to absord the variations in volume of said solid reagent by flowing in response to the stress therefrom and to maintain a sufficient thermal contact with said wall.

2. The reactor according to claim 1, characterized in that at the level of said space, the mean distance between any point on the lateral surface of said solid reagent and said inner wall of said reactor is between 1 and 10 mm.

3. The reactor according to one of claims 1 and 2, characterized in that said fluid contact material is graphite in powder or pellet form.

4. The reactor according to claim 3, characterized in that said graphite is natural graphite.

5. The reactor according to one of claims 1 and 2, characterized in that said fluid contact material is a metal powder in pellet form or atomized form.

6. The reactor according to one of claims 3 and 4, characterized in that the apparent density of said graphite in powder or pellet form is between 0.5 and 1.0 g/cm³.

7. The reactor according to one of claims 3 and 4, characterized in that the apparent density of said graphite in powder or pellet form is between 0.6 and 0.8 g/cm³.

8. The reactor according to one of claims 1 to 7, characterized in that said solid reagent is provided with a device for confining said fluid contact material.
